Europäisches Patentamt

**European Patent Office**

**Office européen des brevets**

(11) Publication number: **0 129 304**
**B1**

(12) **EUROPEAN PATENT SPECIFICATION**

(45) Date of publication of patent specification: **13.07.88**

(21) Application number: **84301830.0**

(22) Date of filing: **16.03.84**

(51) Int. Cl.⁴: **B 01 D 53/04, C 01 B 13/02**

(54) **Molecular sieve type gas separation systems.**

(30) Priority: **15.06.83 GB 8316294**

(43) Date of publication of application:
**27.12.84 Bulletin 84/52**

(45) Publication of the grant of the patent:
**13.07.88 Bulletin 88/28**

(84) Designated Contracting States:
**DE FR GB IT SE**

(56) References cited:
**EP-A-0 022 178**
**EP-A-0 046 369**
**DE-A-2 837 281**

(73) Proprietor: **NORMALAIR-GARRETT (HOLDINGS) LIMITED**
**Yeovil Somerset (GB)**

(72) Inventor: **Hamlin, Humphrey Albert Samuel**
**27 Bishopston**
**Montacute Somerset (GB)**
Inventor: **Taylor, James Cornish**
**67 Preston Road**
**Yeovil Somerset (GB)**

(74) Representative: **Jack, Bruce James et al**
**FORRESTER & BOEHMERT Widenmayerstrasse 4/I**
**D-8000 Munchen 22 (DE)**

Courier Press, Leamington Spa, England.

EP 0 129 304 B1

## Description

This invention relates to gas separation systems utilising molecular sieves and is especially but not exclusively concerned with the employment of such systems in the aviation field for obtaining oxygen-enriched air as a breathable gas for aircrew.

A common manner of operating a molecular sieve type gas separation system employing one or more molecular sieve beds involves charging the or each bed with feed gas mixture—e.g. air—under pressure and continuing the feed to the bed to maintain the charge pressure during delivery of the required product gas constituent(s) to use or storage. When the bed approaches saturation, the feed is discontinued and the bed vented to release the charge pressure, whereafter the bed is purged. The pressurising of the sieve bed promotes adsorption of the constituents to be retained by the bed, while the subsequent depressurising promotes desorption of the retained constituents to facilitate flushing of these from the bed.

In aircraft applications it is normally required that the oxygen concentration in the breathable gas supplied to aircrew shall be related to cabin altitude, i.e. to the ambient pressure obtaining within their enclosure, so that the oxygen partial pressure in the breathable gas is kept within a physiologically acceptable range of values.

Originally in proposed aircraft applications of molecular sieve type gas separation systems, such systems were treated as a source of substantially pure oxygen to be utilised in the manner traditional in aircrew breathable gas supply systems: that is to say, the substantially pure oxygen product gas delivered by the separation system is proposed to be diluted with air to provide a breathable gas mixture of the required oxygen partial pressure, in a manner analogous to the utilisation of the oxygen obtained from sources such as high pressure storage bottles and liquid oxygen converters.

The utilisation of a product gas that is substantially pure oxygen for producing oxygen-enriched air as breathable gas involves the use of appropriate mixing valves and related control devices to derive the desired breathable gas mixture. Such valves and control devices tend to be heavy and to be potentially unreliable through their inclusion of capsules and the like for sensing ambient pressure changes.

It has been proposed, therefore, to operate such a sieve system to produce a breathable gas of the required oxygen partial pressure directly from the molecular sieve system rather than by downstream dilution.

One embodiment of this concept disclosed in GB—A—2,029,257 (Linde) is a method of producing breathable gas having an oxygen concentration dependent on altitude, comprising obtaining the total volume of breathable gas required in normal continuous service solely by the controlled adsorptive removal of nitrogen from compressed air by means of reversible adsorbers operated in a cycle comprising adsorption and reverse desorption phases. The adsorbers are so operated that, during each adsorption phase, a continuously increasing proportion of nitrogen passes through to the outlet end of the adsorber on-stream and the oxygen concentration of the breathable gas formed is adjusted within permissible range in accordance with the cabin pressure by controlling the amount of gas flowing through the adsorbers and/or the ratio of adsorption to desorption pressure.

In another embodiment of this concept, disclosed in EP—A—0,046,369 (Normalair-Garrett), control means responsive to the composition of the product breathable gas are adapted to control regeneration of the adsorber beds to maintain delivery of a product gas having the desired oxygen partial pressure. The control means particularly controls vent valve means for control of the regeneration phase and may also utilise a microprocessor to provide a variety of other useful system functions.

The system disclosed in EP—A—0,046,369 was originally envisaged primarily for use on advanced high performance combat aircraft, possibly with development potential still to be realised, so that the scope accorded by microprocessor-based control was not out of place and, indeed lends itself to the introduction of more advanced life support systems. However, with the potential use of molecular sieve type gas separation systems in more cost-conscious aircraft such as trainers, attention has turned to the attraction of minimal ground servicing.

A system meeting this requirement is disclosed in EP—A—0,080,300 (Normalair-Garrett) and has control means comprised by a fixed logic sequencer controlling the sequential operation of charge and vent valves for cyclically subjecting each sieve bed to a charge/adsorption on-stream phase followed by a purge/desorption regeneration phase. The control means provide that during the regeneration phase the gas pressure in a sieve bed at least substantially equals the ambient atmospheric pressure or a pressure related thereto and that for a predetermined range of ambient atmospheric pressure the overall cycle time and the relative durations of said phases are fixed at values such that the oxygen content of delivered product gas remains within physiologically acceptable limits for breathing.

The cycle time can be modified at one or more predetermined altitude thresholds by pressure transducer means, for example, altitude switches, arranged to modify the output signal of the sequencer to reduce the cycle time in each ascending altitude band. Use of one altitude switch operating at 4,500 metres (15,000 feet) enables satisfactory concentrations of oxygen in the product gas to be obtained below this 4,500 metres (15,000 feet) threshold and also in a substantial range of altitude above this threshold by a single modification of the cycle time at this threshold. However, this arrangement results in over-high oxygen concentrations, at low demand flow rates, in an altitude band between 4,500 and 7,000 metres (15,000 to 23,000 feet). Whilst this problem could be overcome by modifying the cycle time in additional steps at appropriate altitude thresholds, this would necessitate additional altitude switches which would complicate the control means and introduce extra weight and servicing requirements. For future advanced oxygen systems, a means of steadily increasing oxygen concentration with increasing altitude is now considered desirable.

The present invention aims to maintain simplicity of control while providing improved performance such that the concentration of oxygen in the product gas can be held within the generally accepted tolerance band through an altitude range of, approximately, sea level to 9,000 metres (30,000 feet).

According to the present invention a molecular sieve type gas separation system adapted to deliver enriched product gas to an outlet, the system comprising at least one sieve bed and control means for cyclically subjecting said bed to a charge/adsorption on-stream phase followed by a purge/desorption regeneration phase, said control means being arranged to provide that during said regeneration phase the gas pressure in said bed at least substantially equals the ambient atmospheric pressure or a pressure related thereto and that for a predetermined range of ambient atmospheric pressure the relative durations of the said phases are fixed, is characterised by means responsive to the pertaining concentration of a desired constituent in the product gas delivered to the outlet and arranged to adjust the overall cycle time in such manner that this said concentration is maintained within predetermined limits.

In application of a system in accordance with the present invention to an aircraft for supplying oxygen-enriched air to aircrew, the outlet will generally deliver to one or more oronasal breathing masks fed by way of a demand flow regulator.

In the regeneration phase it is preferable for obtaining best efficiency that the bed be opened to the lowest available pressure, which in the aircraft application will be ambient atmospheric pressure; however the bed may be opened to cabin pressure which is directly related to ambient atmospheric pressure.

The control means may comprise a fixed logic sequencer controlling the sequential operation of charge and vent valves associated with each bed, and may further include a partial pressure transducer means responsive to the concentration of the enriching constituent in the delivered gas and arranged for variably associating the fixed logic elements with said charge and vent valves in accordance with the desired concentration of the enriching constituent.

The control means may provide phase relative durations in the ratio of 2:1 in favour of the charge/adsorption phase or some other ratio such as 1:1 which gives equal periods for the charge and the adsorption phase. The control means may switch the cycle time between a mean, a shorter and a longer time, or it may switch the cycle time between two different times only. Alternatively the control means may be arranged to vary the overall cycle time between a shorter and a longer time in direct proportion to change in level of concentration. The cycle times are predetermined as appropriate to the size of the beds, such that the shorter time provides for maximum performance and the longer time provides for derated performance of the beds.

The partial pressure transducer means may include a galvanic type gas sensor or, preferably for quicker response, may use a flueric partial pressure sensor. In systems in which the control means utilises a switching operation the sensor is arranged so as to operate switch means for activating a sequencer unit to operate at different fixed time cycles, whereas in systems in which the control means utilises a direct proportioning operation the sensor is arranged to vary the cycle time between predetermined maximum and minimum times.

One embodiment of the invention will be described by way of example with reference to the accompanying drawings in which:

Figure 1 is a schematic representation of a molecular sieve gas separation system, according to the invention, that is suitable for aircraft applications;

Figure 2 is a diagrammatic illustration of a switching device including a flueric partial pressure of oxygen sensor device suitable for use in the system shown in Figure 1;

Figure 3 is a diagram showing the operating sequence of the principal valves of the system shown in Figure 1;

Figure 4 illustrates graphically the range of the level of concentration of oxygen values which switch the switching device of Figure 2 from sea level to 7,600 metres;

Figure 5 illustrates graphically the level of concentration of oxygen in the product gas of the system represented in Figure 1 at three different flow rates from sea level to 9,000 metres when the system is operated with the switching device of Figure 2 and;

Figure 6 illustrates graphically the level of concentration of oxygen in the product gas when the system of Figure 1 is operated at two different cycle times for two different flow rates from sea level to 9,000 metres.

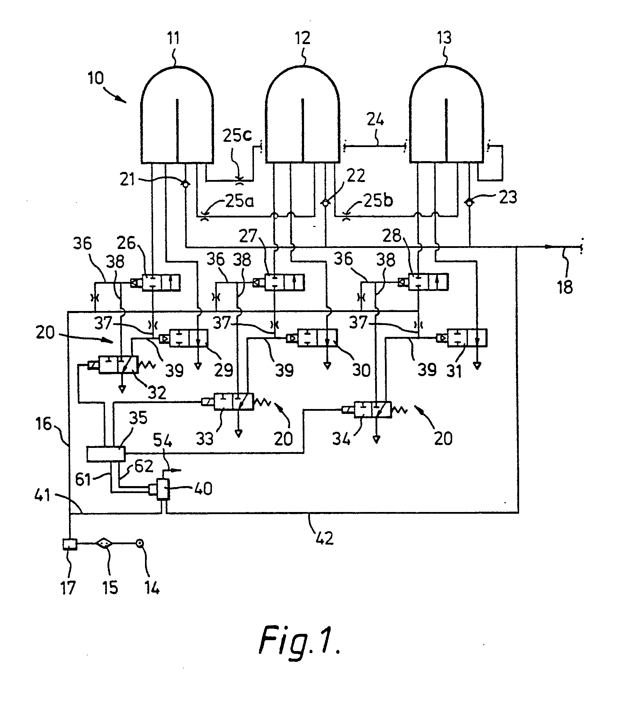

Referring now to Figure 1, a molecular sieve type gas separation system for supplying oxygen-enriched air to the aircrew of an aircraft includes, in accordance with one embodiment of the invention, a set 10 of three molecular sieve beds 11, 12, 13 suitably contained and arranged to receive atmospheric air from a source 14, such as a compressor stage of an engine of the aircraft, so as to deliver product gas in the form of air that is increasingly enriched with oxygen as the operating altitude increases. The bed set 10 is coupled to the supply source 14 through a filter 15 by way of a supply line 16 which includes a pressure regulating valve 17. The product outlets of the three beds 11, 12, 13 are conjoined to a single delivery line 18 for delivery of product gas to suitable demand flow regulator means (not shown and forming no part of this invention).

The sieve beds 11, 12, 13 are arranged for receiving compressed air from the supply line 16 under the control of three similar valve arrangements 20 and in this embodiment are suited to the adsorption of nitrogen by use of a suitable molecular sieve material, such as Type 5A, as available, for example, from Bayer AG or Union Carbide Corporation, while passing oxygen so that the product gas delivered to the delivery line 18 is oxygen-enriched air having an oxygen concentration determined by the operation of the system as explained hereinafter.

The sieve beds 11, 12, 13 are connected to the delivery line 18 by way of non-return valves 21, 22, 23, respectively, and are also connected in series, one to another, by a purge loop 24 which includes three flow regulating orifices 25a, 25b, 25c disposed one in each section of the loop between the individual beds.

Each valve arrangement 20 controls a charge inlet port and a vent port of a single sieve bed and comprises a charge valve and a vent valve of similar construction controlled by a servo valve. Thus the sieve beds 11, 12, 13 are connected to the supply line 16 via charge valves 26, 27, 28, respectively, and to ambient atmospheric pressure or to a pressure directly related thereto via vent valves 29, 30, 31, respectively.

The servo chambers of the valves constituting each pair of charge and vent valves 26/29, 27/30, 28/31 are connected to the supply line 16 and also to an individual servo valve associated with each respective pair of charge and vent valves; that is, solenoid operated bleed switching valves 32, 33, 34 are respectively connected to the servo chambers of the valves of the valve pairs 26/29, 27/30 and 28/31. The switching valves 32, 33, 34 are actuated by a fixed logic sequencer unit 35 having a predetermined fixed operating ratio of, in this embodiment, 2:1. The switching valves, 32, 33, 34, serve the pairs of charge and vent valves 26/29, 27/30 and 28/31, respectively, in such manner that while a charge valve is open its companion vent valve is closed and vice versa, and the sequencer is so connected as to cause the open period of the charge valves to be twice that of the vent valves or, in another embodiment wherein a ratio of 1:1 is used, to be equal to that of the vent valves. The cross-sectional area of the vent flow paths from the sieve beds to ambient is greater than the corresponding area of the supply air flow path into the beds.

In this embodiment it is preferred that all the non-return valves 21, 22, 23; the charge valves 26, 27, 28; and the vent valves 29, 30, 31; are of the resilient diaphragm type (not illustrated structurally).

The charge valves and the vent valves are arranged for their diaphragms to be pressure closed upon their valve seats by supply pressure fed to their servo chambers via restricted ducts 36, 37, respectively, and for relief of these chambers via unrestricted ducts 38, 39, respectively.

The sieve beds 11, 12, 13, may be of any profile and form suitable to the system and available space envelope. However, in this embodiment the base plate of each bed is provided with a charge port and a vent port positioned to one side of an internal bed-divider wall, and a purge loop connection and a delivery line connection positioned at the other side of the wall.

The sequencer unit 35 in this embodiment comprises a relay and a solid state timer element having timing modes providing two different overall cycle times, of, in this embodiment, nine seconds and thirty seconds.

A switching device 40 is connected to the sequencer unit for switching the timer element from one cycle time mode to the other in response to increase or decrease in the concentration of oxygen in the product gas in relation to a desired value.

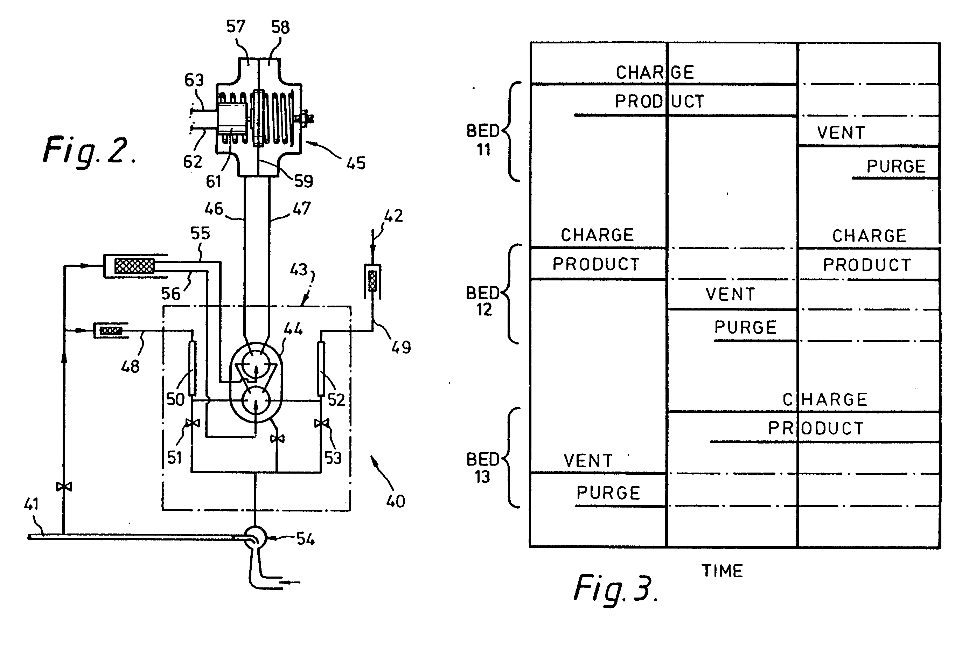

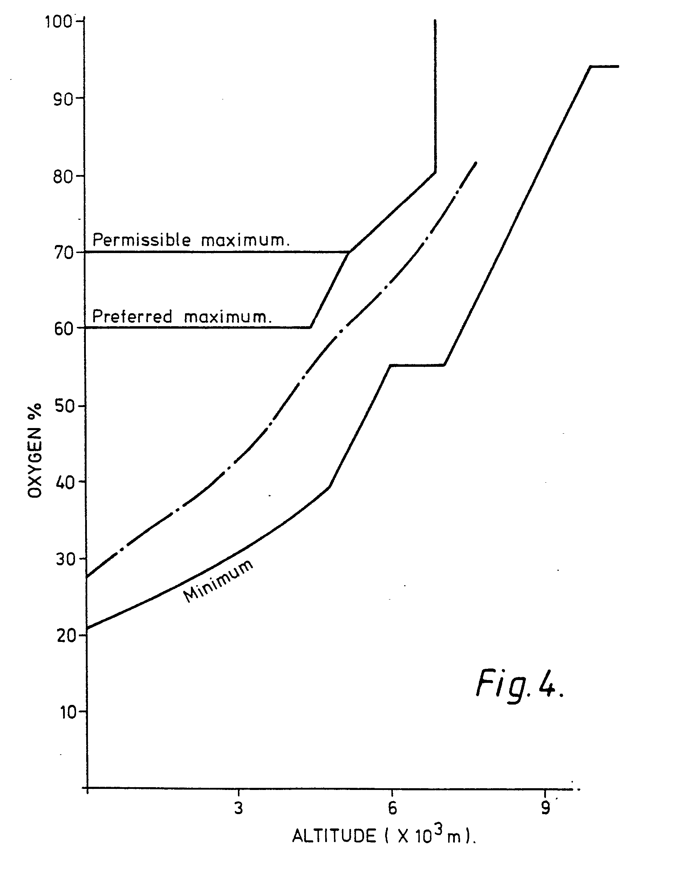

In this embodiment of the invention the switching device 40 includes a flueric gas concentration, i.e. partial pressure of oxygen, sensor 43 which is arranged to draw reference gas from the supply line 16 and sample gas from the delivery line 18 by way of lines 41 and 42, respectively. Referring to Figure 2, the sensor 43, the construction and operation of which is described in detail in EP—A—0,036,285 (Normalair-Garrett), incorporates a flueric laminar flow proportional amplifier 44 having an output bias towards one outlet port. A pneumatically operated electrical switch means 45 is connected to the output ports of the amplifier 44 by output lines 46, 47. The complementary part of the sensor 43 comprises, generally, a flueric bridge network having two bridge legs 48, 49, connected to the reference and sample gas lines 41, 42, respectively. The legs 48, 49 respectively include a linear resistor 50, 52 and an orifice resistor 51, 53. The resistors in the respective legs are arranged in series and so as to provide an asymmetric balance of the flow rates through the bridge legs. The asymmetric balance is so selected that in operation a constant pressure output signal is generated for a chosen partial pressure of oxygen in the sampled product gas in varying altitude conditions. For this exemplary embodiment the relationship of the chosen partial pressure of oxygen, expressed as a percentage of oxygen, to altitude is shown in Figure 4.

Preferably a small flueric aspirator 54 is included for drawing the gases through the bridge legs 48, 49, and is connected to the reference gas line 41 for obtaining its operating power. The line 41 is also arranged to supply the two power-jet lines 55, 56 of the amplifier 44, whilst the output lines 46, 47 of the amplifier connect to respective chambers 57, 58 of the switch means 45 on the two sides of a dividing flexible diaphragm 59. The diaphragm is held in a null position by two opposing light springs 60 so as to barely contact a micro-switch 61 mounted in the chamber 57. Two electrical connections 62, 63 of the micro-switch connect an appropriate electric power source (not shown) with the sequencer unit 35.

In this aircraft application, the system delivers oxygen-enriched air as breathable gas to aircrew usually by way of demand flow regulators and oronasal breathing masks. Referring to Figure 1, supply air is obtained from the engine source 14 of the aircraft and fed into the supply line 16 to the sieve beds by way of filter 15 disposed upstream of a suitable pressure regulating valve 17 which, for example, may be set to open to a source pressure of 276 kPa (40 psi) and control at 310 kPa (45 psig). The delivery line 18 feeds to an oronasal breathing mask (not shown) by way of a demand type breathable gas regulator of suitable form (not shown), upstream of which is a standby pressurised breathable gas source (not shown), such as an oxygen cylinder for providing 100% oxygen deliverable to the regulator in conditions of low supply-air pressure, low cabin pressure or low concentration (partial pressure) of oxygen in the product gas delivered from the molecular sieve beds. The standby gas source may be activated by any suitable monitor/activator system.

In operation, a desired partial pressure of oxygen in the delivered product gas is maintained, which is preferably predetermined to be equal to or greater than the partial pressure of oxygen obtaining at sea level. In this connection it should be noted that in operation of a sieve bed, such as one of the beds 11, 12, 13, optimum gas separation efficiency is obtained when the bed is in a fully purged nitrogen-free condition. As the bed becomes progressively saturated with retained nitrogen, its separating efficiency declines.

In the present invention, we operate each bed continually in or into a partially saturated condition so as to obtain during the course of a charge/adsorption phase a required volume of product gas in the form of air enriched with oxygen to a desired partial pressure. We may fully cleanse each bed during regeneration and then run it, during charge/adsorption, beyond saturation for sufficient time to obtain overall a required volume of product gas containing oxygen in an amount corresponding to a desired partial pressure, or we may only partly cleanse each bed during regeneration so that during charge/adsorption it delivers a volume of product gas having, overall, the desired oxygen partial pressure.

It should be noted that with three beds operated in overlapping sequence as described below, product gas over-rich in oxygen delivered at the commencement of a bed on-stream phase is partly used for purging an adjacent bed and partly mixed with under-rich product then being delivered at that time by the remaining bed.

The product gas delivered by the system is thus of sensibly constant composition.

To obtain most efficient working of the beds their pressure should be reduced during the regeneration phase to the lowest available pressure. Thus it will be preferable to vent the beds overboard to the ambient atmosphere external of the aircraft. However, they may be vented to the aircraft cabin, the cabin pressure being directly related to ambient atmospheric pressure.

In the illustrated embodiment, the beds 11, 12, 13 are placed on-stream and regenerated in alternating and overlapping sequence by operation of the valve arrangements 20 in which the solenoid operated switching valves 32, 33, 34 are controlled by the sequencer unit 35 alternately to open and close the charge and vent ports of their respective beds by alternate connection of the servo chambers of the charge valves 26, 27, 28, and of the vent valves 29, 30, 31, to ambient.

The time of opening of all the valves and the overlapping relationship of the cycles of the three beds is best understood with reference to Figure 3. With the opening of the charge valve 26 of, nominally, the first bed 11 in sequence, when the switching valve 32 is holding servo pressure in the vent valve 29 and releasing it from the charge valve 26, supply air is fed into the bed wherein nitrogen is adsorbed by the molecular sieve material and oxygen-enriched air is passed into the delivery line 18 on opening of the non-return valve 21. At the end of the period of charging and delivering product gas the switching valve 32 is reversed to close the charge valve 26 and open the vent valve 29, whereupon the bed 11 becomes open to ambient and discharges thereinto so commencing desorption of nitrogen from the sieve material while reducing the pressure in the bed 11 and in that section of the purge loop 24 which is downstream of the orifice 25a in the part of loop 24 between the beds 11 and 12, whereupon initial stage product gas from the overlapping, sequentially second, bed 12 flows into bed 11 to purge it clean.

Thus compressed supply air is admitted cyclically to the beds 11, 12, 13 by way of the respective sequencer controlled valve arrangements 20 and when a bed is on-stream, oxygen-enriched air flows from the bed into the delivery line, but shortly after switching of the charge and vent valves to opposite mode the bed is purged by new product gas from one of the other beds coming on-stream. Thus product gas from bed 11 purges bed 13, product gas from bed 12 purges bed 11 and product gas from bed 13 purges bed 12. Evenness of flow is not lost during the withdrawal of some product gas from one bed for the purpose of purging another bed because the third bed in the bed set still continues to deliver product gas during this period.

Variation in the average partial pressure of oxygen in the oxygen-enriched air produced by a bed during a charge/adsorption phase occurs with change in pressure of the ambient condition to which the bed is vented during the preceding regeneration phase, so that the concentration of oxygen increases with (although not as fast as) reducing ambient pressure owing to the rate of desorption of nitrogen from the sieve material increasing. However, further control to maintain the oxygen concentration closer to the mean desired throughout the cabin altitude range is accomplished by control of the sequencer unit 35 by the switching device 40. This device draws reference gas from the system air-supply line 16 into its bridge leg 48 and sample gas from the product gas delivery line 18 into its bridge leg 49 and while the oxygen partial pressure in the sample gas is below the desired partial pressure of oxygen value for which the bridge network of the flueric sensor 43 is preset the bias of the amplifier 44 directs the output signal therefrom via duct 46 so as to deflect the diaphragm 59 of the switch means to the right (in Figure 2), thereby to set the timer of the sequencer unit to operate in the mode giving the nine seconds cycle time. On the other hand, when the sample gas oxygen partial pressure is above the preset value the output signal is oppositely directed via duct 47 and the diaphragm 59 moves to depress the micro-switch 61, which sets the timer of the sequencer unit to operate in the mode giving a cycle time of thirty seconds. Thus by switching the cycle time from one value to the other alternately according to pertaining sample gas oxygen partial pressure relative to the preset required partial pressure, the concentration of oxygen in the product gas is readily maintained within the generally accepted tolerance band through the normally required altitude range.

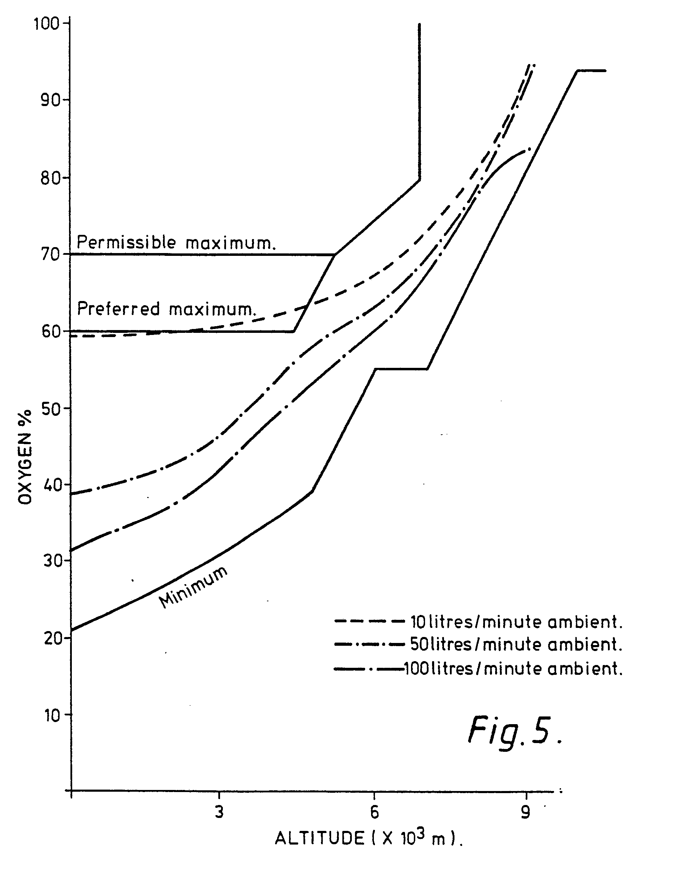

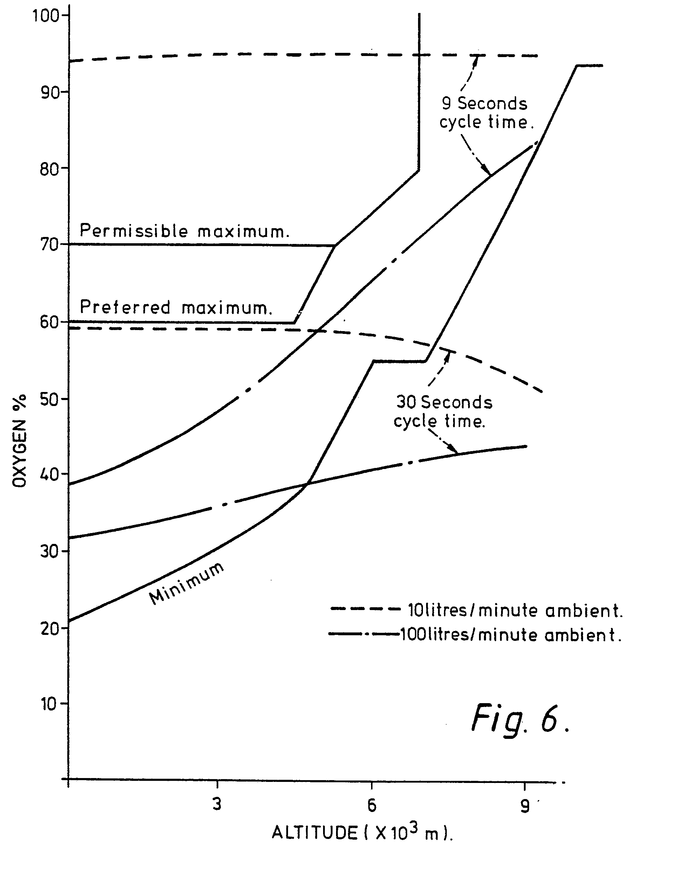

This is seen by reference to Figures 5 and 6 which are graphs showing the results of tests carried out in our laboratories.

Thus, Figure 5 shows the oxygen concentrations measured in oxygen-enriched product gas at altitudes up to 9,000 metres (30,000 feet) with a 210 kPa (30 psig) pressure air-supply to the system and at product gas demand flows of 10, 50 and 100 litres/minute ambient, with the switching device 40 connected to the sequencer unit 35.

Figure 6, on the other hand, shows the oxygen concentration in oxygen-enriched product gas at altitudes up to 9,000 metres (30,000 feet) with a 210 kPa (30 psig) pressure air-supply to the system and at product gas demand flows of 10 and 100 litres/minute ambient, for constant cycle times of nine seconds and thirty seconds, i.e. with the switching device disconnected from the sequencer unit.

It will be seen that the variations in oxygen concentration over this wide range of product gas demand flows is small in Figure 5 as compared with Figure 6.

Whilst the foregoing description of the test results obtained with this embodiment relate to a system using a fixed logic sequencer unit operating to provide a 2:1 duration ratio in favour of the opening of the charge valves relative to the vent valves of each bed, it is found that use of a sequencer unit capable of operating to provide a 1:1 duration ratio will marginally improve the oxygen concentration in the product gas at high altitudes and reduce the difference in the oxygen concentration of the product gas at high and low demand flows, respectively, at low altitudes. Further it may be found beneficial to use overall cycle times of other than the exemplary thirty seconds and nine seconds used in the tests of this embodiment.

Another embodiment of the invention, is not separately illustrated but corresponds to that illustrated in Figures 1 and 2 with substitution of the switch means 45 thereof by a variable resistor means which is adapted to be operated pneumatically by the flueric amplifier 44. The varying voltage output from such resistor means is fed to a suitably responsive timer element of the sequencer unit 35 to vary the cycle time steplessly or in a number of steps between predetermined minimum and maximum cycle times, in a manner appropriate to retaining the desired partial pressure of oxygen in the product gas by producing a cycle time adjustment that takes account of the magnitude of sample gas oxygen partial pressure departure from the required value.

In a further non-illustrated embodiment, the switching device 40 of the system of Figures 1 and 2, which includes the flueric sensor 43 and the switch means 45, is substituted by a galvanic oxygen partial pressure sensor, the output of which is fed directly to the sequencer unit 35 to vary the cycle time between predetermined minimum and maximum cycle times.

## Claims

1. A molecular sieve type gas separation system adapted to deliver enriched product gas to an outlet, the system comprising at least one sieve bed (11, 12, 13) and control means (35) for cyclically subjecting said bed to a charge/adsorption on-stream phase followed by a purge/desorption regeneration phase, said control means being arranged to provide that during said regeneration phase the gas pressure in said bed at least substantially equals the ambient atmospheric pressure or a pressure related thereto and that for a predetermined range of ambient atmospheric pressure the relative durations of the said phases are fixed, characterised by means (40) responsive to the pertaining concentration of a desired constituent in the product gas delivered to the outlet and arranged to adjust the overall cycle time in such manner that this said concentration is maintained within predetermined limits.

2. A molecular sieve type gas separation system as claimed in Claim 1, characterised in that said control means comprises a fixed logic sequencer (35) for controlling sequential operation of charge valves (26, 27, 28) and vent valves (29, 30, 31) associated with each bed (11, 12, 13).

3. A molecular sieve type gas separation system as claimed in Claim 1 or Claim 2, characterised in that said means responsive to the pertaining concentration of the said constituent comprises a flueric partial pressure sensor (43).

4. A molecular sieve type gas separation system as claimed in any preceding claim, characterised in that said control means provide, at least within one said predetermined range of outlet ambient pressure, phase relative durations in a ratio of 1:1.

5. An on-board oxygen generating system for an aircraft, comprising a molecular sieve type gas separation system arranged to deliver oxygen-enriched air to an outlet by adsorbing nitrogen from air fed to the system, the system including at least two sieve beds (11/12/13) and control means (35) for cyclically subjecting each said sieve bed to a charge/adsorption on-stream phase followed by a purge/desorption regeneration phase and so that during its regeneration phase each bed is opened to ambient atmospheric pressure or a pressure related thereto, characterised in that for a predetermined range of ambient atmospheric pressure the control means provide two different selectable overall cycle times with the relative durations of the phases being fixed, and by flueric partial pressure sensor means (43) responsive to the pertaining concentration of oxygen in the oxygen-enriched air delivered to the outlet and adapted to switch the control means between the two cycle times so as to maintain the oxygen concentration within predetermined limits.

**Patentansprüche**

1. Gastrennungssystems vom molekulare Siebtyp zur Lieferung eines angereicherten Produktgases zu einem Auslaß, mit wenigstens einem Siebbett (11, 12, 13) und Steuermitteln (35) zum zyklischen Unterziehen des Bettes unter eine Lade/Adsorptions-Betriebsphase gefolgt von einer Reinigungs/Desorptions-Regenerationsphase, wobei die Steuermittel dazu eingerichtet sind sicherzustellen, daß während der Regenerationsphase der Gasdruck in dem Bett dem atmosphärischen Umgebungsdruck oder einem auf diesen bezogenen Druck wenigstens im wesentlichen gleich ist, und daß für einen vorgegebenen Bereich des atmosphärischen Umgebungsdrucks die relativen Dauern der Phasen fest sind, gekennzeichnet durch auf die jeweilige Konzentration eines gewünschten Bestandteils in dem an den Auslaß gelieferten Produktgases ansprechend zur Justierung des Gesamtzyklus derart eingerichtet sind, daß die Konzentration in vorgegebenen Grenzen gehalten wird.

2. Gastrennungssystems vom molekular Siebtyp nach Anspruch 1, dadurch gekennzeichnet, daß die Steuermitteln einen Festlogiksequenzer (35) zum Steuern des Betriebsablaufs von Speiseventilen (26, 27, 28), und Entlüftungsventilen (29, 30, 31), die jedem Bett (11, 12, 13) zugehörig sind, steuert.

3. Gastrennungssystems vom molekular Siebtyp nach Anspruch 2 oder 3, dadurch gekennzeichnet, daß jedes der auf die jeweilige Konzentration des Bestandteiles einen fluerischen Partialdrucksensor (43) aufweist.

4. Gastrennungssystems vom molekular Siebtyp nach einem der vorangehenden Ansprüche, dadurch gekennzeichnet, daß das Steuermittel wenigstens innerhalb einem der vorgegebenen Bereiche des Ausgangsumgebungsdrucks relative Phasendauern in einem Verhältnis von 1:1 schafft.

5. Bordeigenes Sauerstofferzeugungssystem für ein Flugzeug, mit einem Gastrennungssystem vom Molekularsystem, das eingerichtet ist zur Erzeugung von sauerstoffangereicherter Luft zu einem Auslaß durch Adsorbieren von Stickstoff aus der dem System zugeführten Luft, wobei das Systems wenigstens zwei Siebbetten (11/12/13) und Steuermittel (35) zum zyklischen Unterwerfen jedes der Siebbette unter eine Lade/Adsorptions-Betriebsphase gefolgt von einer Reinigungs/Desorptions-Regenerationsphase aufweist, und so daß während der Regenerationsphase jedes Bett dem atmosphärischen Umgebungsdruck oder einem hierauf bezogenen Druck offen ist, dadurch gekennzeichnet, daß für einen vorgege-benen Bereich einen atmosphärischen Umge-bungsdrucks die Steuermittel zwei unterschied-lich wählbare Gesamtzykluszeiten, bei denen die relativen Dauern der Phase fest sind, schaffen, und durch fluerische Partialdrucksensormittel (43), die auf die jeweilige Konzentration des Sauerstoffs in der zu dem Ausgang gelieferten Sauerstoff angereicherten Luft ansprechen und zum Schalten der Steuermittel zwischen den beiden Zykluszeiten eingerichtet sind, so daß die Sauerstoffkonzentration zwischen den vorgegebenen Grenzen bleibt.

**Revendications**

1. Système de séparation de gaz du type à tamis moléculaire, prévu pour fournir un gaz enrichi à une sortie, ledit système, qui comprend au moins un lit de tamis (11, 12, 13) et un moyen de commande (35) pour soumettre cycliquement ledit lit à une phase de production par charge/adsorption suivie d'une phase de régénération par purge/désorption, ledit moyen de commande étant agencé de façon que, pendant ladite phase de régénération, la pression de gaz dans ledit lit soit au moins sensiblement égale à la pression atmosphérique ambiante ou à une pression liée à celle-ci et de façon que, pour une plage prédéterminée de la pression atmosphérique ambiante, les durées relatives desdites phases soient fixes, étant caractérisé par un moyen (40) qui est sensible à la concentration particulière d'un constituant désiré dans le gaz produit fourni à la sorite et qui est prévu pour régler la durée totale de cycle d'une manière telle que cette dite concentration soit maintenue dans les limites prédéterminées.

2. Système de séparation de gaz du type à tamis moléculaire suivant la revendication 1, caractérisé en ce que ledit moyen de commande comprend un séquenceur logique fixe (35) pour commander le fonctionnement séquentiel de vannes de charge (26, 27, 28) et de vannes d'évent (29, 30, 31) associées à chaque lit (11, 12, 13).

3. Système de séparation de gaz du type à tamis moléculaire suivant la revendication 1 ou la revendication 2, caractérisé en ce que ledit moyen qui est sensible à la concentration particulière dudit constituant comprend un capteur fluide de pression partielle (43).

4. Système de séparation de gaz du type à tamis moléculaire suivant l'une quelconque des revendications précédentes, caractérisé en ce que ledit moyen de commande fournit, au moins à l'intérieur d'une dite plage prédéterminée de pression ambiante extérieure, des durées relatives de phases dans un rapport de 1:1.

5. Système de production d'oxygène à bord d'un avion, comprenant un système de séparation de gaz du type à tamis moléculaire prévu pour fournir de l'air enrichi en oxygène à une sortie, par adsorption de l'azote de l'air alimentant le système, le système comportant au moins deux lits de tamis moléculaire (11/12/13) et un moyen de commande (35) pour soumettre cycliquement chaque dit lit de tamis à une phase de production par charge/adsorption suivie d'une phase de régénération par purge/désorption et de sorte que, pendant sa phase de régénération, chaque lit est ouvert à la pression atmosphérique ambiante ou à une pression liée à celle-ci, caractérisé en ce que, pour une plage prédéterminée de pression atmosphérique ambiante, le moyen de commande fournit deux durées totales de cycle différentes sélectables, les durées relatives des phases étant fixes, et en ce que le moyen fluide (43) de détection de pression partielle est sensible à la concentration particulière en oxygène dans l'air enrichi en oxygène fourni à la sortie et est prévu pour commuter le moyen de commande entre les deux durées de cycle de façon à maintenir la concentration en oxygène dans les limites prédéterminées.

0 129 304

Fig.1.

1

Fig.2.

57 58
63
62
61 59 45
46 47
42
55
56 43
48 44 49
50 52
51 53 40
41 54

Fig.3.

| | | | |
|---|---|---|---|
| BED 11 | CHARGE | | |
| | PRODUCT | | |
| | | | VENT |
| | | | PURGE |
| BED 12 | CHARGE | | CHARGE |
| | PRODUCT | | PRODUCT |
| | | VENT | |
| | | PURGE | |
| BED 13 | | | CHARGE |
| | | | PRODUCT |
| | VENT | | |
| | PURGE | | |

TIME

0 129 304

2

Fig.4.

Fig.5.

ALTITUDE ( X 10³ m ).

*Fig. 6.*